Europäisches Patentamt

European Patent Office

Office européen des brevets

(19)

(11) **EP 0 931 846 B1**

(12) **FASCICULE DE BREVET EUROPEEN**

(45) Date de publication et mention
de la délivrance du brevet:
**02.01.2003 Bulletin 2003/01**

(51) Int Cl.⁷: **C23C 2/00**, C23C 2/38,
C23C 2/24, C03C 25/16

(21) Numéro de dépôt: **99400129.5**

(22) Date de dépôt: **21.01.1999**

(54) **Procédé d'enduction métallique de fibres par voie liquide**

Verfahren zur metallischen Beschichtung von Fibern auf flüssigem Wege

Process for the metallic coating of fibres by liquid means

(84) Etats contractants désignés:
**DE ES FR GB IT**

(30) Priorité: **22.01.1998 FR 9800644**

(43) Date de publication de la demande:
**28.07.1999 Bulletin 1999/30**

(73) Titulaire: **SNECMA MOTEURS**
**75015 Paris (FR)**

(72) Inventeurs:
• **Dambrine, Bruno Jacques Gérard**
**77350 Le Mee S/ Seine (FR)**
• **Feigenblum, José Pierre Roberto**
**38000 Grenoble (FR)**
• **Garnier, Marcel**
**38410 Uriage (FR)**
• **Hamburger, Jean**
**38330 Saint Nazaire les Eymes (FR)**
• **Honnorat, Yves Christian Louis Alain**
**(FR)**
• **Molliex, Ludovic Edmond Camille**
**91800 Brunoy (FR)**
• **Weiss, Gérard**
**91540 Mennecy (FR)**

(56) Documents cités:
**WO-A-95/20684**          **DE-A- 3 718 178**
**FR-A- 2 649 625**        **US-A- 3 758 329**

• **PATENT ABSTRACTS OF JAPAN vol. 016, no.
334 (C-0964), 21 juillet 1992 & JP 04 099160 A
(NIPPON STEEL CORP), 31 mars 1992**

## Description

L'invention se rapporte à un procédé d'enduction de fibres au trempé dans du métal liquide, et plus particulièrement mais non exclusivement à un procédé permettant d'obtenir un revêtement épais et régulier de métal pouvant avoir une température de fusion et une réactivité élevée, tels les alliages de titane.

Les matériaux les plus prometteurs pour réduire la masse des produits destinés à l'aéronautique ou au spatial, en particulier les turboréacteurs, sont les composites à matrice métallique constitués d'une matrice à base d'alliage métallique renforcée par des fibres, lesdites fibres étant par exemple en céramique. Ces matériaux ont un haut niveau de performances en raideur et en résistance, et ils peuvent être utilisés en lieu et place d'alliages monolithiques pour réaliser des pièces telles que les disques de compresseur ou de turbine, les arbres, les corps de vérins, ces matériaux pouvant aussi être utilisés comme renforts locaux dans des aubes, des carters, des entretoises, etc. Les gains de masse réalisés sur les pièces varient de 15 à 70% suivant les applications, leur encombrement est réduit et leur durée de vie sensiblement augmentée. Ces matériaux sont aussi intéressants dans d'autres domaines où un champ de forces volumiques s'applique à une pièce, par exemple une enveloppe de pression telle un canon ou un réservoir de fluide sous pression.

Le brevet FR. 2.684.578 décrit un procédé de fabrication de pièces en matériau composite à matrice métallique qui utilise des fibres céramiques revêtues du matériau de la matrice métallique, ces fibres étant ensuite bobinées et pressées à la température de forgeage isotherme du matériau de la matrice. Le revêtement peut être effectué en phase vapeur sous champ électrique, par électrophorèse à partir de poudres métalliques ou au trempé dans un bain de métal liquide. Le rapport entre le volume de fibre et le volume total du matériau fibre + matrice est typiquement mais non obligatoirement d'environ 30%, ce qui conduit à enduire les fibres d'une couche de métal dont l'épaisseur est très supérieure à celle d'un traitement de surface ordinaire. Par exemple, une fibre de 100μm de diamètre doit dans ces conditions être recouverte par une épaisseur E de métal égale à 35μm. Par ailleurs, l'épaisseur du revêtement doit être très régulière afin de garantir un espacement constant des fibres dans le matériau composite. Si ce n'était pas le cas, il se produirait sous charge des concentrations de contraintes qui réduiraient sensiblement la tenue du matériau composite en fatigue, avec rupture des fibres ou fissuration de la matrice. Ce phénomène bien connu provient de l'importante différence entre les modules d'Young de la fibre et du matériau de matrice. Typiquement, les fibres céramiques de carbure de silicium SiC ont un module d'Young de l'ordre de 500GPa alors qu'une matrice en alliage de titane telle le TA6V a un module d'Young d'environ 100GPa. Enfin, de tels matériaux à haut rapport résistance/masse sont d'un grand intérêt notamment pour l'industrie aéronautique et spatiale, mais leur prix de revient élevé constitue un frein à leur développement, ce prix de revient élevé provenant aussi bien du coût des matériaux utilisés que de la complexité des procédés de fabrication connus mis en oeuvre.

Pour enduire les fibres, l'utilisation du procédé de dépôt en phase vapeur sous champ électrique présente plusieurs inconvénients qui le rendent industriellement peu rentable:

- Ce procédé est très lent, car le débit de métal déposé est faible alors que l'épaisseur de l'enduction à réaliser est importante.
- Une quantité importante de métal se dépose sur les instruments et les parois de l'enceinte. Non seulement ce métal est perdu, mais il faut aussi fréquemment interrompre le travail pour procéder à un décrassage de l'installation.
- L'installation est coûteuse et ne peut en conséquence être amortie que sur des productions importantes.
- Enfin, seuls certains alliages métalliques peuvent être utilisés avec ce mode d'enduction.

Le procédé au trempé est dans son principe le plus rapide, et le brevet US 5.049.419 en donne un exemple de mise en oeuvre: La fibre passe dans du métal liquide maintenu dans un creuset, cette fibre étant tenue tendue par trois poulies folles dont l'une est immergée dans le métal liquide. Ce procédé présente cependant l'inconvénient d'être difficilement utilisable avec des alliages présentant une température de fusion et/ou une réactivité élevée, car la tenue de la poulie folle, et plus généralement des composants mécaniques immergés dans le métal liquide est très réduite voire impossible dans de telles conditions. Il est connu de protéger la paroi intérieure du creuset par un oxyde tel l'alumine, mais seule l'yttrine $Y_2O_3$, qui est très coûteux, est utilisable en présence d'un alliage de titane. Par ailleurs, un revêtement d'oxyde ne résout pas le problème posé par la poulie immergée dans le métal liquide.

On connaît la loi dite "de Landau" qui permet de déterminer l'épaisseur de la couche métallique ainsi déposée sur la fibre en fonction de différents paramètres. Cependant, cette loi ne s'applique pas correctement sur l'intégralité des plages des valeurs que l'on peut donner à ces paramètres dans un processus industriel.

On connaît aussi, par exemple par le brevet FR.2.649.625, un creuset dit "froid" dans lequel le métal liquide est maintenu en lévitation par un champ électromagnétique produit par un inducteur électromagnétique hélicoïdal entourant le creuset. De tels creusets sont conçus et utilisés pour éviter la contamination du métal liquide par le matériau constituant la paroi du creuset.

On connaît également par un résumé du brevet japonais J04099160 un procédé d'enduction métallique d'un ruban, ledit procédé consistant à faire défiler verticalement ledit ruban dans un creuset à induction contenant du métal liquide, ledit ruban passant par un orifice situé au fond du creuset et par l'ouverture au dessus du creuset, ledit orifice étant déporté vers le bord du creuset, ledit métal liquide étant écarté de l'orifice par une lévitation partielle assurée par l'inducteur. Un avantage de ce procédé est de permettre la suppression de tout organe mécanique immergé dans le métal liquide. Un premier inconvénient de ce procédé est de rendre difficile l'amenée du ruban dans le métal liquide. Un second inconvénient du procédé est de donner une épaisseur irrégulière à la couche de métal déposée à la surface du ruban, car le ruban traverse très obliquement la surface du métal liquide.

L'invention propose un procédé d'enduction métallique de fibres par voie liquide, ledit procédé étant plus particulièrement mais non exclusivement destiné à l'enduction par des métaux et alliages métalliques présentant une température de fusion et une réactivité élevée, ledit procédé simplifiant les manipulation de la fibre, ledit procédé comportant essentiellement les opérations suivantes:

a) maintenir le métal liquide dans un creuset, à la température appropriée,
b) tirer la fibre tendue dans le métal liquide.
c) le creuset étant du type "à lévitation" et supprimant au moins partiellement le contact entre le métal liquide et la paroi du creuset.

Un tel procédé est remarquable en ce que:

d) la paroi du creuset comporte deux orifices situés de part et d'autre du métal liquide, à des endroits où le métal liquide n'arrive pas au contact de ladite paroi du creuset, lesdits orifices étant reliés par une fente dans la paroi du creuset, ladite fente mettant en communication l'intérieur du creuset avec l'extérieur, ladite fente ayant la forme d'une surface réglée et étant d'une largeur suffisante, ladite fente étant située à un endroit où le métal liquide n'arrive pas au contact de la paroi du creuset,
e) la fibre est tirée et maintenue tendue selon un segment droit entre des moyens de préemption de ladite fibre, lesdits moyens de préemption étant extérieurs au creuset,
f) on amène la fibre à l'intérieur du creuset en la faisant passer par la fente selon une trajectoire transversale à ladite fibre,
g) le segment droit de fibre passe par un premier orifice, traverse le métal liquide à l'intérieur du creuset et ressort par le second orifice.

On comprend que le creuset permet de maintenir sans fuite par lévitation une quantité suffisante de métal liquide autour d'un segment droit de fibre tirée et maintenue tendue par les moyens de préemption extérieurs audit métal liquide. On comprend aussi que du fait que les organes mécaniques immergés dans le métal liquide ne sont plus nécessaires, le procédé permet d'améliorer dans des proportions importantes la longévité de l'équipement, et il peut être appliqué à des métaux à température de fusion élevée et très réactifs tels les alliages de titane.

On comprend également que la fente constitue un passage pour la fibre tendue depuis l'extérieur du creuset jusqu'aux orifices, et permet ainsi l'introduction dans les orifices de la fibre tenue tendue par les moyens de préemption, ceci par un simple déplacement de ladite fibre dans la fente. L'homme du métier définira la largeur de la fente en fonction des imprécisions dans le positionnement de la fibre par rapport à sa position théorique pendant le déplacement. On comprend que l'effet de lévitation empêche le métal liquide de passer aussi dans la fente. Ainsi, on amènera la fibre à l'intérieur du creuset en la faisant passer par la fente selon une trajectoire transversale à ladite fente, et on retirera la fibre du creuset en la faisant également passer par la fente selon une trajectoire transversale à ladite fibre, mais en sens inverse.

La fibre est tirée à une vitesse appropriée pour obtenir un revêtement à l'épaisseur choisie.

La possibilité de maintenir une quantité suffisante de métal liquide autour de la fibre, cette quantité n'étant limitée que par la capacité du creuset, permet d'effectuer un revêtement régulier de la fibre avec un pilotage simple et non critique de la lévitation du métal liquide. En effet, l'homme du métier peut positionner la fibre à une distance suffisante de la surface du métal liquide, c'est à dire de façon à la faire passer dans la région centrale du volume de métal liquide, afin que ce métal liquide puisse varier en position et en volume sans perdre le contact avec la fibre, la variation de volume provenant de la consommation non encore renouvelée de métal requise pour constituer la couche métallique autour de la fibre, les variations de position du métal liquide provenant de la consommation non encore renouvelée de métal et des tolérances de pilotage de la lévitation.

Un autre avantage du procédé est de réduire la dégradation de la fibre pendant l'enduction de métal liquide sous l'effet de la chaleur. En effet, la fibre tendue est droite au moins à l'intérieur du creuset, ce qui réduit le chemin à parcourir et par répercussion réduit le temps de transit de la fibre à l'intérieur du creuset.

Comparé au procédé de dépôt en phase vapeur sous champ électrique, Le procédé selon l'invention permet de déposer le métal liquide sur la fibre avec un débit très élevé et une installation simple, donc peu coûteuse et rapidement amortie. De plus, il n'entraîne pas de perte de métal.

Avantageusement encore, on fera ressortir la fibre de la surface du métal liquide suivant une direction sensiblement perpendiculaire à ladite surface en le point de sortie. Une telle disposition a pour effet de donner à ladite surface une symétrie axiale par rapport à la fibre dans un proche voisinage dudit point de sortie. Elle permet donc de rendre symétrique le champ des pressions produites par la tension superficielle du métal liquide pendant son dépôt sur la fibre, et par répercussion d'améliorer la constance de l'épaisseur de la couche métallique autour de la fibre.

Avantageusement encore, on fera ressortir la fibre de la surface du métal liquide suivant une direction sensiblement verticale. Une telle disposition a pour effet de rendre le champ de gravitation axisymétrique par rapport à la fibre au voisinage du point de sortie, et pour résultat d'améliorer encore la constance de l'épaisseur de la couche métallique autour de la fibre.

Avantageusement encore, le creuset et l'inducteur qui l'entoure auront une forme de révolution selon un axe géométrique, et on fera ressortir la fibre de la surface du métal liquide sensiblement selon cet axe géométrique. Une telle disposition a pour effet de donner au champ électromagnétique généré par l'inducteur dans le métal liquide une symétrie axiale par rapport à la fibre au moins au voisinage du point de sortie, et pour résultat d'améliorer encore la constance de l'épaisseur de la couche métallique autour de la fibre.

Avantageusement encore, on utilisera un creuset disposé verticalement dont un orifice est tourné vers le bas et l'autre vers le haut, la fibre entrant par l'orifice du bas, traversant le métal liquide de bas en haut et ressortant par l'orifice du haut. Une telle disposition a pour effet d'orienter les forces de lévitation selon la direction et le sens du fil ressortant du métal liquide, et pour résultat de favoriser le dépôt et la rétention du métal liquide sur la fibre, donc de permettre l'obtention d'une couche de métal plus épaisse. Le creuset sera de préférence, mais non obligatoirement, axisymétrique par rapport à la fibre le traversant.

Toutefois, dans un mode préféré de mise en oeuvre de l'invention assurant une grande productivité, les deux orifices de passage de la fibre et la fente les reliant sont positionnés en regard de l'espace entre deux spires de l'inducteur, et on amène la fibre tendue depuis l'extérieur de l'ensemble creuset + inducteur jusqu'à l'intérieur du creuset en la faisant passer entre les deux spires de l'inducteur et par la fente, ceci toujours selon une trajectoire transversale à ladite fibre.

On comprend que le positionnement de la fente en regard de l'espace entre deux spires de l'inducteur permet de prolonger le passage de la fibre à l'extérieur de l'inducteur, ce qui simplifie encore l'amenée de la fibre dans le creuset. En effet, la fibre peut être montée et tendue sur les moyens de préemption totalement à l'extérieur de l'ensemble creuset + inducteur, voire en un endroit éloigné de cet ensemble, ladite fibre étant ensuite amenée à l'intérieur du creuset par le déplacement de l'ensemble ainsi constitué fibre + moyens de préemption.

Avantageusement, on alimente le creuset en métal selon le procédé suivant:

    a. on dispose une ouverture d'alimentation au fond du creuset et en dessous de l'inducteur, ladite ouverture d'alimentation étant tournée vers le bas,
    b. on introduit une barre de métal par l'ouverture d'alimentation, et on fait remonter l'extrémité supérieure de ladite barre dans le creuset à l'intérieur de l'inducteur,
    c. on écarte le métal liquide du bord de l'ouverture d'alimentation par l'effet de lévitation, ledit écartement s'effectuant au moins sur une distance égale au jeu E1 laissé entre la barre et le bord de l'ouverture d'alimentation.

On comprend que la partie supérieur de la barre fond en pénétrant à l'intérieur de l'inducteur, le métal liquide ainsi produit alimentant le creuset. L'introduction de la barre est effectuée progressivement en fonction du besoin de production de métal liquide.

On comprend que l'effet de lévitation coopère avec la barre pour assurer l'étanchéité du creuset et empêcher ainsi le métal liquide de s'écouler par le jeu E1 laissé entre la barre et le bord de l'ouverture d'alimentation, ledit effet de lévitation repoussant le métal liquide du bord de l'ouverture d'alimentation, ledit jeu E1 étant nécessaire pour permettre à ladite barre de passer par ladite ouverture d'alimentation, ladite barre étant pleine par définition. L'intensité du champs magnétique au bord de l'ouverture d'alimentation n'est pas critique, cette intensité devant seulement être suffisante pour assurer l'étanchéité du creuset. L'homme du métier veillera cependant à limiter cette intensité afin de maintenir à l'état solide le métal de la barre à partir et en dehors de l'ouverture d'alimentation, ce qui permet d'assurer l'étanchéité du creuset. On comprend en effet qu'une intensité excessive provoquerait la fusion de la barre au delà de l'ouverture à l'extérieur du creuset, ladite fusion risquant de provoquer l'écoulement par gravité du métal liquide contenu dans le creuset à travers ladite ouverture d'alimentation.

On comprend que le jeu E1 est un jeu mécanique nécessaire pour permettre le passage de la barre par l'ouverture d'alimentation.

L'invention a l'avantage de bien stabiliser la forme de la masse du métal liquide et de lui éviter les vibrations plus ou moins amorties qui résulteraient d'une alimentation discontinue effectuée en jetant des morceaux de métal dans le creuset. En effet, la barre arrive par en dessous au contact du métal liquide, et le métal nouvellement liquéfié se mélange progressivement au métal déjà liquide en vainquant la gravité.

Avantageusement, on utilisera un creuset cylindrique et sans fond, l'ouverture d'alimentation se confondant alors avec l'extrémité inférieure du creuset, un dôme de métal liquide se formant dans le creuset au dessus de la barre. Une telle disposition permet d'utiliser une barre de diamètre maximal compatible avec la taille du creuset, ladite barre atteignant ainsi un diamètre voisin du diamètre intérieur du creuset, ce qui permet d'augmenter, sans encombrement excessif de l'installation, la quantité de métal disponible à l'entrée du creuset, et par répercussion d'augmenter la capacité du creuset à fournir en quantité du métal liquide.

Avantageusement, le creuset étant disposé à l'intérieur d'une enceinte contenant un gaz neutre en surpression, on disposera une ouverture dans la paroi de l'enceinte, ladite ouverture de l'enceinte mettant en communication l'intérieur de l'enceinte avec l'extérieur, ladite ouverture de l'enceinte étant placée en face de l'ouverture d'alimentation du creuset, et on fera passer la barre simultanément par cette ouverture avec un jeu E2 réduit et par l'ouverture d'alimentation du creuset dans les conditions précitées.

Un tel procédé permet d'utiliser une enceinte de taille réduite, puisque l'alimentation du creuset s'effectue depuis l'extérieur de l'enceinte en passant la barre simultanément par l'ouverture de l'enceinte et par l'ouverture d'alimentation du creuset. On comprend que le gaz en surpression fait obstacle à l'air ambiant et l'empêche de pénétrer dans l'enceinte par le jeu E2 laissé entre la barre et l'ouverture de l'enceinte. L'ensemble constitué par l'enceinte, le creuset et l'inducteur étant de taille réduite peuvent être déplacés ou manipulés facilement, sans préjudice cependant de sa capacité à fournir du métal liquide en quantité.

On comprend que le jeu E2 entre la surface latérale de la barre et le bord de l'ouverture de l'enceinte est un jeu mécanique nécessaire pour faire passer ladite barre. L'homme du métier réduira ce jeu E2 au stricte nécessaire compatible avec les imprécisions de la géométrie de la surface latérale de la barre, ladite précision pouvant être améliorée par la rectification de ladite surface latérale.

L'invention sera mieux comprise et les avantages qu'elle procure apparaîtront plus clairement au vu d'un exemple détaillé de réalisation et des figures annexées.

La figure 1 illustre par une vue en coupe l'enduction de la fibre par le métal liquide maintenu dans un creuset à lévitation.

La figure 2 illustre par une vue en coupe de ce même ensemble l'extraction de la fibre hors du métal liquide.

La figure 3 illustre par cette même vue en coupe l'introduction de la fibre dans le métal liquide.

La figure 4 illustre par une demi-coupe fortement grossie la fibre sortant du métal liquide.

Les figures 5 et 6 illustrent par une vue en coupe et une vue de dessus la fibre passant entre les spires de l'inducteur.

La figure 7 illustre un creuset cylindrique alimenté par en dessous par une barre de métal, ledit creuset étant à l'intérieur d'une enceinte.

La figure 8 illustre une installation industrielle pour mettre en oeuvre le procédé dans sa forme préférée.

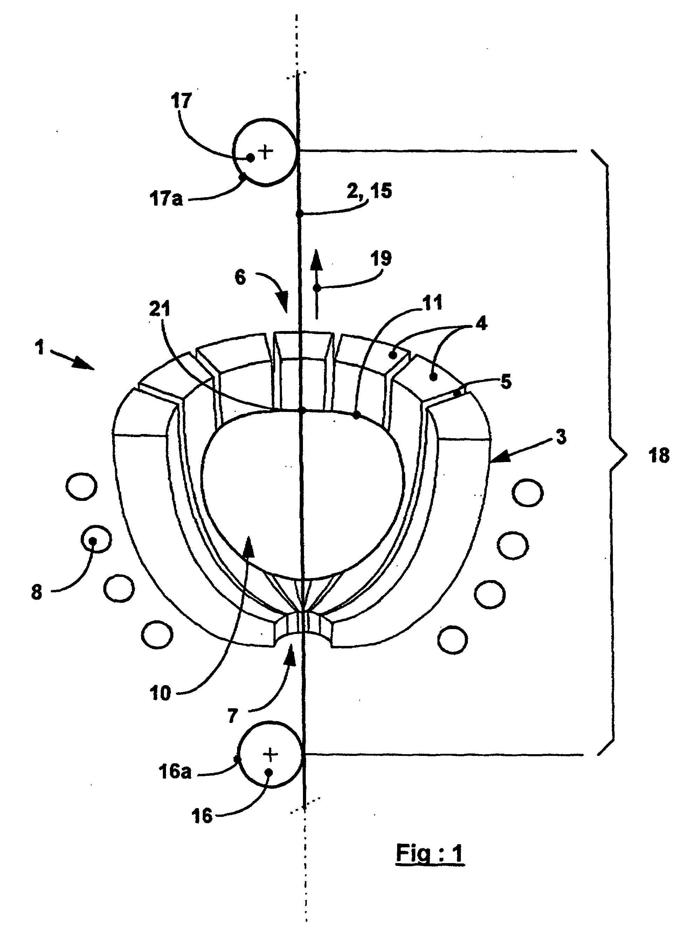

On se reportera en premier lieu à la figure 1.

Le creuset 1 est du type "creuset froid" appelé aussi "creuset à lévitation" et présente une forme générale de révolution autour de l'axe géométrique 2 vertical. Le creuset 1 comporte une paroi latérale 3 composée dune pluralité de secteurs 4 refroidis par une circulation de fluide non représentée, lesdits secteurs 4 étant séparés les uns des autres par autant de fentes 5 radiales. Le creuset 1 a sensiblement la forme d'un bol avec au-dessus un orifice supérieur 6 large et au fond un orifice inférieur 7 étroit, lesdits orifices 6,7 étant circulaires et centrés sur l'axe géométrique 2, lesdits orifices 6,7 bordant la paroi latérale 3, lesdites fentes 5 arrivant jusqu'aux orifices 6,7. Le creuset 1 est entouré latéralement et par en dessous par un inducteur hélicoïdal 8 également d'axe géométrique 2. Une pseudo-sphère de métal liquide 10 est maintenue à la température appropriée et en lévitation à l'intérieur du creuset 1, la surface 11 dudit métal liquide 10 étant écartée de la paroi 3 par l'effet de lévitation.

La fibre 15 est maintenue tendue entre des moyens de préemption constitués dans cet exemple par une poulie folle inférieure 16 et une poulie folle supérieure 17, lesdites poulies folles 16,17 étant de part et d'autre du creuset 1, lesdites poulies folles 16,17 comportant chacune une jante, soit respectivement 16a et 17a, lesdites jantes 16a,17a étant tangentes à l'axe géométrique 2, ladite fibre 15 formant entre les poulies folles 16 et 17 un segment droit 18, ledit segment droit 18 étant dans l'axe géométrique 2, ladite fibre 15 traversant au niveau du segment droit 18 successivement et de bas en haut l'orifice inférieur 7, le métal liquide 10 et l'orifice supérieur 6 à une vitesse V représentée par le vecteur vitesse 19. On comprend que les poulies folles 16 et 17 assurent en même temps le positionnement et le guidage de la fibre 15 dans le métal liquide 10. L'installation comporte aussi non représentés une bobine émettrice de fibre 15, une bobine réceptrice, un moteur d'entraînement ainsi que des moyens permettant d'atténuer les accélérations et décélérations de la vitesse de rotation des bobines, selon les techniques connues de l'homme du métier, afin de ne pas casser la fibre 15 au démarrage ou à l'arrêt du défilement de la fibre 15. Par ailleurs, on référencera 21 le point de sortie par lequel la fibre 15 ressort de la surface 11 du métal liquide 10.

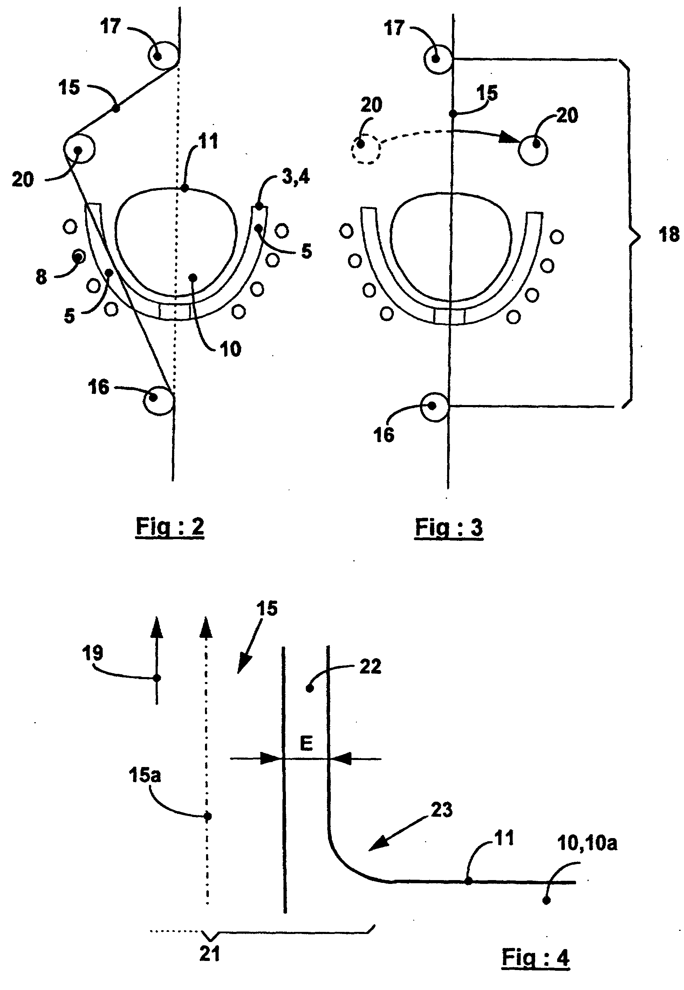

On se reportera maintenant à la figures 2. Une poulie folle mobile 20 disposée au dessus du creuset 1 entre la poulie folle inférieure 16 et la poulie folle supérieure 17 écarte la fibre 15 de l'axe géométrique 2 et du métal liquide 10, ladite fibre 15 passant dans l'une des fentes 5 entre les secteurs 4. On comprend que la fibre 15 passe par l'espace compris entre le métal liquide 10 et l'inducteur 8, ladite fibre 15 n'étant plus alors au contact dudit métal liquide 10.

On se reportera maintenant à la figure 3. Cette même poulie folle mobile 20 a maintenant basculé de l'autre coté de l'axe géométrique 2, et la fibre 15 tendue forme alors un segment droit 18 entre la poulie folle supérieure 17 et la poulie folle inférieure 16, ladite fibre 15 passant alors dans le métal liquide 10.

On se reportera maintenant à la figure 4. La fibre 15 de section circulaire selon l'axe géométrique 15a émerge de la surface 11 du bain référencé 10a de métal liquide 10 à la vitesse V représenté par le vecteur vitesse 19. On référencera 22 la couche de métal liquide qui s'est formée autour de la fibre 15. Dans la zone où la fibre 15 sort du bain 10a, le métal liquide 10 subit un ensemble complexe de sollicitations antagonistes tendant à entraîner et à retenir le métal liquide 10 autour de la fibre 15, ou au contraire à le retenir dans le bain 10a. Les paramètres influants sont: la vitesse V de tirage de la fibre 15, la viscosité du métal liquide 10, ladite viscosité dépendant de la composition et de la température dudit métal liquide 10, la tension superficielle du métal liquide 10, ladite tension superficielle formant le ménisque 23 concave et entourant la fibre 15 à la sortie du bain 10a, et à un moindre degré: la gravitation terrestre, le champs électromagnétique généré par l'inducteur 8 et la masse spécifique du métal liquide 10. On notera que l'influence relative de chacun de ces paramètres dépend de la valeurs de tous les paramètres, et il est difficile dans ces conditions de formuler des lois qui s'appliquent dans toutes les conditions de mise en oeuvre du procédé. En conséquence, l'homme du métier effectuera une première approximation en appliquant la loi dite "de Landau" bien connue, et il affinera ensuite la mise en oeuvre du procédé par quelques expérimentations. On remarquera que les paramètres influents précités sont faciles à maîtriser. Le procédé donnera en conséquence un résultat répétitif.

Dans le cas où l'on désire fabriquer un matériau composite fibre + matrice métallique comprenant en volume 30% de fibre 15, ladite matrice métallique étant de l'alliage de titane, ladite fibre 15 étant en carbure de silicium SiC, ladite fibre 15 ayant un diamètre de 100μm et étant recouverte d'une interface de carbone de 3 à 4 μm, une couche 22 de 35μm est obtenue en deux passes à la vitesse de tirage V = 4m/s. Ce procédé permet ainsi d'enduire 1500m de fibre 15 en moins de 13 minutes avec 105g d'alliage de titane, soit 23cm$^3$. A cette vitesse V, la pseudo-sphère de titane en lévitation ayant un diamètre de 100mm, la fibre 15 ne reste que 1/40 seconde dans le métal liquide 10, ce qui permet de préserver l'intégrité de la fibre et du dépôt de carbone.

Cette même couche 22 de 35μm peut être obtenue en une seule passe à la vitesse de tirage V = 30m/s. Par ailleurs, les fréquences normales du courant électrique alimentant l'inducteur 8, et permettant l'entretien de la lévitation, sont suffisamment élevées pour bloquer par effet pelliculaire les courants électriques naissant par effet de Foucault dans la couche métallique 22. Ainsi, la fibre n'est pas elle-même chauffée par induction. Elle est froide avant d'entrer dans le métal liquide, et elle se refroidit plus rapidement lorsqu'elle en ressort. Dans ces conditions, la solidification de la couche 22 se fait à environ 60mm de la surface 11 du métal liquide 10, ladite surface 11 étant surchauffée de 20°C par rapport à la température de solidification de l'alliage de titane qui est de 1650°C. Cette distance très courte autorise un encombrement raisonnable pour un four d'enduction avec un défilement vertical ascendant de la fibre.

La vitesse d'enduction maximale dépend essentiellement de la capacité de l'installation à assurer sans la casser l'accélération et la décélération de la fibre 15 sur une longueur n'entraînant pas trop de pertes correspondant à de la fibre enduite selon une épaisseur hors tolérances.

On peut disposer différemment les orifices 6,7 et par répercussion positionner le segment 18 de fibre 15 par rapport à la pseudo-sphère de métal liquide 10, selon l'agencement de l'installation, mais ce sera dans certains cas au détriment de l'uniformité de la couche 22 de métal liquide, car l'axisymétrie des forces exercées sur le métal liquide 10 au voisinage de la surface 11 et de la fibre 15 risque d'en être perturbé. L'homme du métier vérifiera par quelques essais selon ses propres conditions de mise en oeuvre du procédé que les irrégularités de la couche 22 restent dans des limites acceptables.

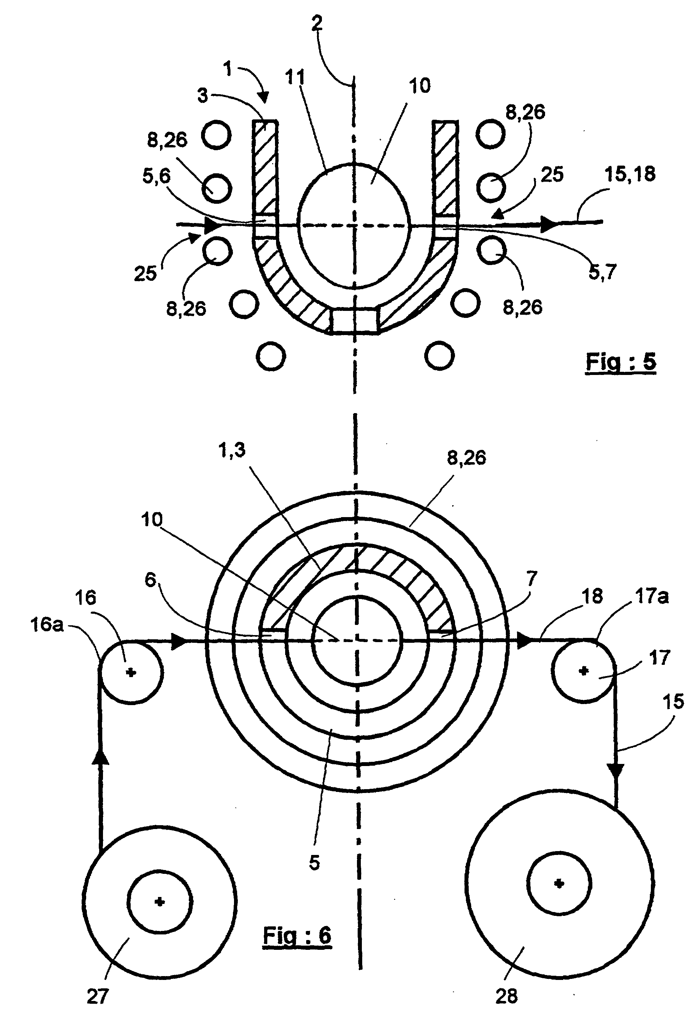

On se reportera maintenant simultanément aux figures 5 et 6. Dans un mode préféré de mise en oeuvre du procédé assurant une grande productivité, les orifices 6,7 et la fente 5 les reliant sont positionnés dans la partie latérale de la paroi 3 du creuset 1, en regard de l'espace 25 entre deux spires 26 de l'inducteur hélicoïdal 8. Ainsi, on amènera la fibre 15 depuis l'extérieur de l'ensemble creuset 1 + inducteur 8 jusqu'à l'intérieur du creuset 1 en la faisant passer entre deux spires dudit inducteur 8 et par la fente 5 selon une trajectoire transversale à ladite fibre 15. Réciproquement, on retirera la fibre 15 du creuset 1 en la faisant également passer par la fente 5 et entre les deux spires 26 de l'inducteur 8 selon une trajectoire transversale à ladite fibre 15, mais en sens inverse.

La fibre 15 sort d'une bobine émettrice 27, passe sur la jante 16a d'une première poulie folle 16, traverse le creuset 1 et l'inducteur 8 en passant entre deux spires 26 dudit inducteur 8, passe sur la jante 17a dune seconde poulie folle 17 et s'enroule sur une bobine réceptrice 28. Les poulies folles 16,17 peuvent se confondre avec les bobines 27,28.

La fibre 15 peut être positionnée pour s'approcher au plus près de l'axe géométrique 2 du creuset 1, afin de couper la surface 11 du métal liquide 10 au plus près de la perpendiculaire à ladite surface 11.

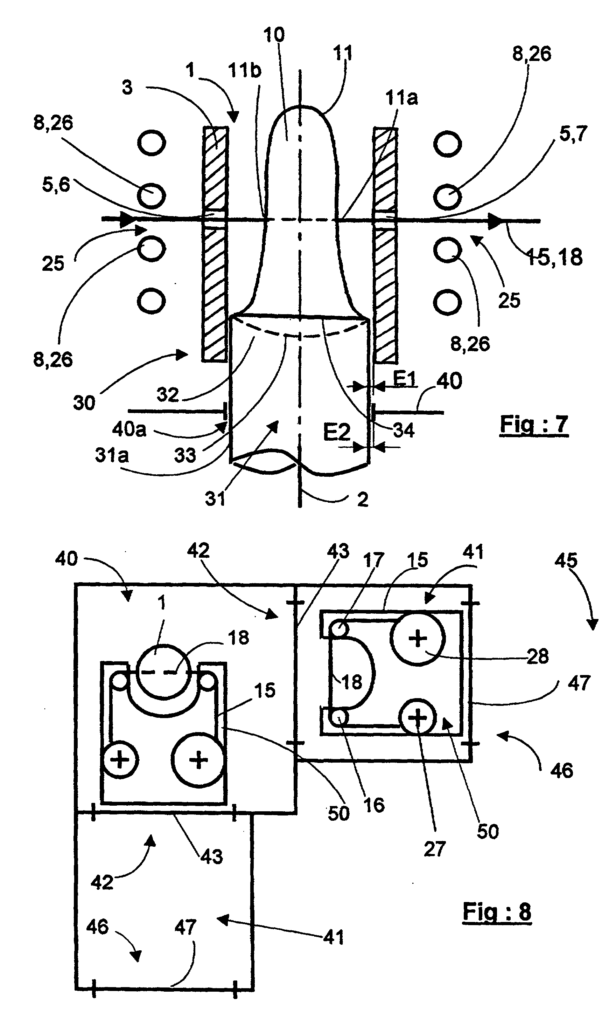

On se reportera maintenant à la figure 7. Le creuset 1 présente une forme cylindrique de révolution autour de l'axe géométrique 2 vertical. Ce creuset 1 n'a pas de fond et se limite donc à sa seule paroi latérale 3, l'inducteur 8 étant disposé autour de ladite paroi latérale 3. L'extrémité inférieure de la paroi latérale 3 constitue une ouverture d'alimentation 30 par laquelle on fait passer une barre 31 cylindrique de forme complémentaire à celle de l'ouverture d'alimentation 30 avec un jeu E1 suffisant. Cette barre 31 est disposée verticalement en dessous du creuset 1 et dans l'axe géométrique 2 dudit creuset 1, ladite barre 31 étant remontée progressivement selon un mouvement de bas en haut, ladite barre 31 étant dans le même métal que le métal liquide 10. En pénétrant à l'intérieur de l'inducteur 8, l'extrémité supérieure 32 de la barre 31 se liquéfie, et le métal liquide 10 ainsi produit forme un dôme au dessus de ladite barre 31, plus précisément au dessus de son extrémité supérieure 32, ce dôme de métal liquide 10 remontant vers le haut du creuset 1 et s'écartant de la paroi 3 latérale dudit creuset 1. La surface géométrique 33 séparant le métal liquide 10 de la barre 31 encore solide forme un ménisque dont la concavité est tournée vers le haut, ce ménisque 33 arrivant sur la ligne d'intersection 34 de la surface latérale 31 a de la barre 31 et de la surface 11 du dôme de métal liquide 10, ladite ligne d'intersection 34 étant positionnée dans l'ouverture d'alimentation 30, ledit métal liquide 10 étant au dessus dudit ménisque 33. L'effet de lévitation écarte le métal liquide 10 de la paroi latérale 3 notamment au bord de l'ouverture d'alimentation 30. De ce fait, le métal liquide 10 ne peut pas passer au dessus de la ligne d'intersection 34 et s'écouler par gravité par le jeu E1 entre la surface latérale 31a de la barre 31 et le bord de l'ouverture d'alimentation 30. Le métal liquide 10 ne touche pas la paroi 3 du creuset 1, ce qui évite sa contamination par ledit creuset 1 lorsque ledit métal liquide 10 est trop réactif, par exemple un alliage de titane. On comprend que le métal liquide 10 est dans cet exemple entièrement porté par la barre 31, l'effet de lévitation étant alors borné à repousser ledit métal liquide 10 vers l'axe géométrique 2 du creuset 1. De ce fait, le dôme de métal liquide 10 ainsi formé est bien stable et favorise une enduction régulière.

La fibre 15 passe horizontalement à travers le dôme de métal liquide 10 de préférence en deux point d'inflexion 11a et 11b de la surface 11 dudit dôme, afin de traverser le plus perpendiculairement possible ladite surface 11. Pour la même raison, on donnera avantageusement au dôme de métal liquide 10 une hauteur au moins égale à deux fois le diamètre intérieur du creuset.

L'origine de ce dôme de métal liquide 10 peut s'expliquer de la façon suivante: le champ magnétique alternatif créé par l'inducteur engendre des courants induits et des forces électromagnétiques dans le métal liquide. Ces forces sont localisées à la périphérie du métal liquide dans une couche superficielle appelée "peau électromagnétique" dont l'épaisseur δ dépend de la fréquence f du courant inducteur et varie comme f$^{-1/2}$. Lorsque la fréquence augmente, donc lorsque l'épaisseur δ de la "peau électromagnétique" diminue, les forces électromagnétiques tendent à devenir perpendiculaires à la surface extérieure du métal liquide, ce qui favorise la composante irrotationnelle de ces forces, à l'origine de la pression électromagnétique, au détriment de la composante rotationnelle, à l'origine du brassage électromagnétique. Ainsi, lorsque l'épaisseur δ de la peau électromagnétique est faible devant la dimension caractéristique L du volume de métal liquide, soit typiquement le rayon du creuset, l'effet de pression est important, le métal liquide subissant une répulsion de la part de l'inducteur et la surface dudit métal liquide s'élevant sous la forme d'un dôme. Plus la fréquence augmente, c'est à dire plus le brassage diminue, plus le dôme est stable.

La hauteur du dôme est principalement fixée par l'intensité du courant dans l'inducteur, c'est à dire par l'intensité du champ magnétique créé. Si B est la valeur de ce champ magnétique, p la masse volumique du métal liquide, μ la perméabilité magnétique et g la gravité, la hauteur h du dôme est

$$h = B^2/2\mu\rho g$$

Ainsi, pour des fréquences élevées correspondant à des valeurs de δ faibles devant la dimension caractéristique L du volume de métal liquide, il est possible d'obtenir des dômes stables de hauteur élevée. La notion de fréquence élevée se quantifie par le fait que le paramètre d'écran $R_\omega$ est grand devant l'unité, avec $R_\omega = \mu\sigma\omega L^2$ où σ désigne la conductivité électrique du métal liquide, ω la pulsation du courant inducteur, soit ω=2πf.

Il est donc possible de faire monter un dôme de métal liquide dans un creuset entouré par un inducteur parcouru par un courant alternatif d'intensité et de fréquence bien choisies.

Afin d'éviter la pollution ou l'oxydation du métal liquide 10, le creuset 1 est disposé dans une enceinte 40 partiellement représentée, ladite enceinte 40 étant remplie avec un gaz neutre ou protecteur, ledit gaz neutre étant porté à une pression un peu supérieure à la pression atmosphérique afin d'éviter toute pénétration de l'air ambiant à l'intérieur de ladite enceinte 40. Cette enceinte 40 comporte dans sa partie inférieure une ouverture 40a tournée vers le bas et dans l'axe géométrique 2 du creuset 1, la barre 10 passant par ladite ouverture 40a avec un jeu E2 limité, le gaz inerte en surpression à l'intérieur de l'enceinte empêchant l'air ambiant de pénétrer dans ladite enceinte 15 par ledit jeu E2 laissé entre la surface latérale 31a de la barre 31 et le bord de l'ouverture 40a de l'enceinte 40. On utilisera de préférence des barre 31 rectifiées, afin de pouvoir réduire ce jeu E2 et par répercussion les fuites de gaz. L'ouverture 40a de l'enceinte 40 est juste devant l'ouverture d'alimentation 30 du creuset 1, et la barre 31 passe simultanément par lesdites ouvertures 30,40a depuis l'extérieur de l'enceinte jusqu'à l'intérieur du creuset 1. On rappelle que les jeux E1,E2 entre la barre 31 et les deux ouvertures 30,40a ont pour fonction de permettre la translation mécanique de ladite barre 31 dans lesdites ouvertures 30,40a.

On se reportera maintenant à la figure 8. L'enceinte 40 communique avec un sas 41 par un passage intérieur 42 obturable par une porte intérieure 43, ledit sas 41 étant lui-même en communication avec l'extérieur 45 par un passage extérieur 46 obturable également par une porte extérieure 47. Un chariot 50 supporte une bobine émettrice 27 de fibre 15, une première poulie folle 16, une seconde poulie folle 17 et une bobine réceptrice 28 de fibre 15, ladite bobine réceptrice 28 tirant la fibre 15, ladite fibre 15 étant tendue entre les deux poulies folles 16,17 pour former un segment droit 18. La fibre 15 est ainsi disposée sur le chariot 50 à l'extérieur 45, la porte intérieure 43 étant fermée, ladite fibre 15 étant ensuite amenée dans l'enceinte 40 par translation du chariot 50 en passant par le sas 41 selon la procédure habituelle, le segment droit 18 de fibre 15 étant alors introduit dans le creuset 1 en passant par une fente non représentée entre deux spires de l'inducteur également non représentées, la porte intérieure 43 étant refermée.

Avantageusement, on disposera deux sas identiques 41a, 41b par exemple à 90° l'un de l'autre. Ainsi, lorsqu'un chariot 50b sera en cours de travail d'enduction de la fibre 15 à l'intérieur de l'enceinte, l'autre chariot 50a sera en cours de désinstallation des bobines de fibre 15 déjà enduite, puis en cours d'installation de nouvelles bobines de fibre 15 à enduire, ladite installation et ladite desinstallation pouvant ainsi s'effectuer en temps masqué pendant que le creuset est en cours d'utilisation.

**Revendications**

1. Procédé d'enduction métallique de fibres par voie liquide comportant essentiellement les opérations suivantes:

a) maintenir le métal liquide (10) dans un creuset (1), la paroi dudit creuset (1) étant référencée (3),
b) tirer la fibre (15) tendue dans le métal liquide (10), ladite fibre (15) ressortant dudit métal liquide (10) en un point de sortie référencé (21),
c) le creuset (1) étant du type "à lévitation" et supprimant au moins partiellement le contact entre le métal liquide (10) et la paroi (3) du creuset (1),

**caractérisé en ce que**:

d) la paroi (3) du creuset (1) comporte deux orifices (6,7) situés de part et d'autre du métal liquide (10), à des endroits ou ledit métal liquide (10) n'arrive pas au contact de ladite paroi (3), lesdits orifices (6,7) étant reliés par une fente (5) dans la paroi (3) de creuset (1), ladite fente (5) mettant en communication l'intérieur du creuset (1) avec l'extérieur, ladite fente (5) ayant la forme d'une surface réglée et étant de largeur suffisante, ladite fente (5) étant située à un endroit où le métal liquide (10) n'arrive pas au contact de la paroi (3) du creuset (1),

et **en ce que**:

e) la fibre (15) est tirée et maintenue tendue selon un segment droit (18) entre des moyens de préemption (16,17) de ladite fibre (15), lesdits moyens de préemption (16,17) étant extérieurs au creuset (1),
f) on amène la fibre (15) à l'intérieur du creuset (1) en le faisant passer par la fente selon une trajectoire transversale à ladite fibre,
g) la fibre (15) tendue passe par un premier orifice (7), traverse le métal liquide (10) et ressort par le second orifice (6).

2. Procédé selon la revendication 1 **caractérisé en ce que** le métal liquide (10) est un alliage de titane.

3. Procédé selon la revendication 1 ou 2, **caractérisé en ce qu'**on fait ressortir la fibre (15) de la surface (11) du métal liquide (10) en un point de sortie référencé (21) suivant une direction sensiblement perpendiculaire à ladite surface (11) en ce point de sortie (21), afin de donner à ladite surface (11) une symétrie axiale par rapport à la fibre (15) au voisinage dudit point de sortie (21).

4. Procédé selon l'une quelconque des revendications 1 à 3, **caractérisé en ce qu'**on fait ressortir sensiblement verticalement la fibre (15) de la surface (11) du métal liquide (10) en un point de sortie référencé (21), afin de rendre le champ de gravitation axialement symétrique par rapport à ladite fibre (15) au voisinage dudit point de sortie (21).

5. Procédé selon l'une quelconque des revendications 1 à 4, **caractérisé en ce qu'**on emploie un creuset (1) et un inducteur (8) ayant une forme de révolution selon un axe géométrique (2), et **en ce qu'**on fait ressortir la fibre (15) de la surface (11) du métal liquide (10) en un point de sortie référencé (21), ladite sortie s'effectuant sensiblement selon l'axe géométrique (2), afin de donner au champ électromagnétique généré par l'inducteur (8) dans le métal liquide (10) une symétrie axiale par rapport à la fibre (15) au voisinage du point de sortie (21).

6. Procédé selon l'une quelconque des revendications 1 à 5, le creuset (1) étant disposé verticalement et ayant un orifice (7) tourné vers le bas et l'autre orifice (6) tourné vers le haut, **caractérisé en ce que** la fibre entre par l'orifice du bas (7), traverse le métal liquide (10) de bas en haut et ressort par l'orifice du haut (6), afin d'orienter les forces de lévitation selon la direction et le sens de la fibre (15) ressortant du métal liquide (10).

**7.** Procédé selon la revendication 6, la paroi (3) dudit creuset (1) étant segmentée, au moins deux segments (4) étant séparés par la fente (5), **caractérisée en ce que** la fibre (15) est maintenue tendue dans le métal liquide par deux poulies folles (16,17) extérieures au creuset (1), et **en ce que** la fibre (15) est écartée dudit métal liquide (10) par une poulie mobile (20), ladite fibre (15) passant par ladite fente (5).

**8.** Procédé selon la revendication 1 ou 2, **caractérisé en ce que** les deux orifices (6,7) de passage de la fibre (15) et la fente (5) les reliant sont positionnés en regard de l'espace (25) entre deux spires (26) de l'inducteur (8), et **en ce qu'**on amène la fibre (15) tendue depuis l'extérieur de l'ensemble creuset (1) + inducteur (8) jusqu'à l'intérieur du creuset (1) en la faisant passer entre les deux spires (26) et par la fente (5).

**9.** Procédé selon la revendication 8 **caractérisé en ce que**:

a. on dispose une ouverture d'alimentation (30) au fond du creuset (1) et en dessous de l'inducteur (8), ladite ouverture d'alimentation (30) étant tournée vers le bas,

b. on introduit une barre (31) de métal par l'ouverture d'alimentation (30), et on fait remonter l'extrémité supérieure (32) de ladite barre (31) dans le creuset (1) à l'intérieur de l'inducteur (8),

c. on écarte le métal liquide (10) du bord de l'ouverture d'alimentation (30) par l'effet de lévitation, ledit écartement s'effectuant au moins sur une distance égale au jeu E1 laissé entre la barre (31) et le bord de l'ouverture d'alimentation (30).

**10.** Procédé selon la revendication 9, **caractérisé en ce qu'**on utilise un creuset (1) cylindrique et sans fond, l'ouverture d'alimentation (30) se confondant alors avec l'extrémité inférieure du creuset (1), un dôme de métal liquide (10) se formant dans le creuset (1) au dessus de la barre (31).

**11.** Procédé selon la revendication 9 ou 10, le creuset (1) étant disposé à l'intérieur d'une enceinte (40) contenant un gaz neutre en surpression, **caractérisé en ce qu'**on dispose une ouverture (40a) dans la paroi de l'enceinte (40), ladite ouverture (40a) de l'enceinte (40) mettant en communication l'intérieur de l'enceinte avec l'extérieur, ladite ouverture (40a) de l'enceinte (40) étant placée en face de l'ouverture d'alimentation (30) du creuset (1), et **en ce qu'**on fait passer la barre (31) par cette ouverture avec un jeu E2 réduit.

**12.** Procédé selon la revendication 10 ou 11, **caractérisé en ce que** la fibre (15) traverse la surface (11) du dôme de métal liquide (10) en deux point d'inflexion (11a,11b) de ladite surface (11).

**13.** Procédé selon l'une quelconque des revendications 10 à 12, **caractérisé en ce que** le dôme de métal liquide (10) a une hauteur au moins égale à deux fois le diamètre intérieur du creuset (1).

**Patentansprüche**

**1.** Verfahren zur metallischen Beschichtung von Fibern auf flüssigem Wege, das im wesentlichen die folgenden Verfahrensschritte aufweist:

a) das flüssige Metall (10) wird in einem Schmelztiegel (1) gehalten, welcher eine Wand (3) aufweist,
b) die gespannte Fiber (15) wird durch das flüssige Metall (10) gezogen, wobei diese Fiber (15) an einer Austrittsstelle (21) aus diesem flüssigen Metall (10) wieder austritt,
c) dabei ist der Schmelztiegel (1) ein "Levitations"-Tiegel und verhindert zumindest teilweise den Kontakt zwischen dem flüssigen Metall (10) und der Wand (3) des Schmelztiegels (1),
**dadurch gekennzeichnet,**
**dass:**
d) die Wand (3) des Schmelztiegels (1) zwei Öfihungen (6,7) enthält, die sich an Stellen, an denen das flüssige Metall (10) nicht in Kontakt mit dieser Wand (3) kommt, beiderseits des flüssigen Metalls (10) befinden, wobei diese Öffnungen (6, 7) durch einen Schlitz (5) in der Wand (3) des Schmelztiegels (1) miteinander verbunden sind, wobei dieser Schlitz (5) eine Verbindung zwischen dem Inneren des Schmelztiegels (1) und der Außenumgebung herstellt, wobei dieser Schlitz (5) die Form einer regelmäßigen Oberfläche hat und ausreichend breit ist, wobei sich dieser Schlitz (5) an einer Stelle befindet, an der das flüssige Metall (10) nicht in Kontakt mit der Wand (3) des Schmelztiegels (1) kommt,
e) die Fiber (15) gemäß einem geraden Segment (18) zwischen Haltemitteln (16, 17) für diese Fiber (15) gezogen und gespannt gehalten wird, wobei diese Haltemittel (16, 17) sich außerhalb des Schmelztiegels (1) befinden,
f) die Fiber (15) ins Innere des Schmelztiegels (1) gebracht wird, indem sie auf einer quer zur Fiber verlaufenden Bahn durch den Schlitz geführt wird,
g) die gespannte Fiber (15) durch eine erste Öffnung (7) gelangt, sich durch das flüssige Metall (10) bewegt und durch eine zweite Öffnung (6) wieder austritt.

2. Verfahren nach Anspruch 1,
**dadurch gekennzeichnet,**
**dass** das flüssige Metall (10) eine Titanlegierung ist.

3. Verfahren nach Anspruch 1 oder 2,
**dadurch gekennzeichnet,**
**dass** dafür gesorgt wird, dass die Fiber (15) aus der Oberfläche (11) des flüssigen Metalls (10) an einer Austrittsstelle (21) im wesentlichen senkrecht zu dieser Oberfläche (11) an dieser Austrittsstelle (21) austritt, um dieser Oberfläche (11) im Bereich dieser Austrittsstelle (21) eine Achssymmetrie im Verhältnis zu der Fiber (15) zu verleihen.

4. Verfahren nach einem der Ansprüche 1 bis 3,
**dadurch gekennzeichnet,**
**dass** dafür gesorgt wird, dass die Fiber (15) aus der Oberfläche (11) des flüssigen Metalls (10) an einer Austrittsstelle (21) im wesentlichen senkrecht austritt, um das Gravitationsfeld im Bereich dieser Austrittsstelle (21) achssymmetrisch zu dieser Fiber (15) zu machen.

5. Verfahren nach einem der Ansprüche 1 bis 4,
**dadurch gekennzeichnet,**
**dass** ein Schmelztiegel (1) und ein Induktor (8) verwendet werden, die um eine geometrische Achse (2) herum kreisförmig gebildet sind, und dass dafür gesorgt wird, dass die Fiber (15) aus der Oberfläche (11) des flüssigen Metalls (10) an einer Austrittsstelle (21) im wesentlichen auf der geometrischen Achse (2) austritt, um das elektromagnetischen Feld, das von dem Induktor (8) in dem flüssigen Metall (10) erzeugt wird, im Bereich der Austrittsstelle (21) achssymmetrisch zur Fiber (15) zu machen.

6. Verfahren nach einem der Ansprüche 1 bis 5, wobei der Schmelztiegel (1) vertikal angeordnet ist und seine Öffnung (7) nach unten gerichtet und die andere Öffnung (6) nach oben gerichtet ist,
**dadurch gekennzeichnet,**
**dass** die Fiber (15) durch die untere Öffnung (7) eintritt, sich von unten nach oben durch das flüssige Metall (10) bewegt und durch die obere dung (6) wieder austritt, so dass die Levitationskräfte in der Richtung der aus dem flüssige Metall (10) austretenden Fiber (15) ausgerichtet werden.

7. Verfahren nach Anspruch 6, wobei die Wand (3) des Schmelztiegels (1) segmentiert ist, wobei mindestens zwei Segmente (4) durch den Schlitz (5) voneinander getrennt werden,
**dadurch gekennzeichnet,**
**dass** die Fiber (15) von zwei Losrollen (16, 17), die sich außerhalb des Schmelztiegels (1) befinden, in dem flüssigen Metall gespannt gehalten wird, und dass die Fiber (15) von einer beweglichen Rolle (20) in Abstand von dem flüssigen Metall (10) gehalten wird, wenn die Fiber (15) durch den Schlitz (5) gelangt.

8. Verfahren nach Anspruch 1 oder 2,
**dadurch gekennzeichnet,**
**dass** die beiden Durchlassöffnungen (6, 7) für die Fiber (15) und der sie verbindende Schlitz (5) gegenüber dem Raum (25) zwischen zwei Wicklungen (26) des Induktors (8) angeordnet sind, und dass die gespannte Fiber (15) von außerhalb der Gesamtanordnung des Schmelztiegels (1) und des Induktors (8) bis ins Innere des Schmelztiegels (1) gebracht wird, indem sie zwischen den beiden Wicklungen (26) und durch den Schlitz (5) geführt wird.

9. Verfahren nach Anspruch 8,
**dadurch gekennzeichnet,**
**dass** :

a) im Boden des Schmelztiegels (1) und unterhalb des Induktors (8) eine Versorgungsöffnung (30) angeordnet ist, die nach unten gerichtet ist,
b) durch diese Versorgungsöffnung (30) eine Metallstange (31) geschoben wird und das obere Ende (32) dieser Metallstange (31) in den innerhalb des Induktors (8) befindlichen Schmelztiegel (1) eingeführt wird,
c) das flüssige Metall (10) durch den Levitationseffekt in Abstand von dem Rand der Versorgungsöffnung (30) gehalten wird, wobei dieser Abstand mindestens über eine Strecke hergestellt wird, die gleich dem Spiel E1 zwischen der Stange (31) und dem Rand der Versorgungsöffnung (30) ist.

10. Verfahren nach Anspruch 9,
**dadurch gekennzeichnet,**
**dass** ein zylinderförmiger Schmelztiegel (1) ohne Boden verwendet wird, so dass die Versorgungsöflhung (30) dabei mit dem unteren Ende des Schmelztiegels (1) zusammenfällt, wobei sich in dem Schmelztiegel (1) über der Stange (31) eine Haube aus flüssigem Metall (10) bildet.

11. Verfahren nach Anspruch 9 oder 10, wobei der Schmelztiegel (1) im Inneren eines abgeschlossenen Raums (40) angeordnet ist, der ein neutrales, unter Druck stehendes Gas enthält,
**dadurch gekennzeichnet,**
**dass** in der Wand des Raums (40) eine Öffnung (40a) angeordnet ist, wobei diese Öffnung (40a) des Raums (40) das Innere des abgeschlossenen Raums mit der Außenumgebung in Verbindung setzt, wobei diese Öffnung (40a) des Raums (40) gegenüber der Versorgungsöffnung (30) des Schmelztiegels (1) angeordnet ist, und dass die Stange (31) mit einem kleineren Spiel E2 durch diese Öffnung geschoben wird.

12. Verfahren nach Anspruch 10 oder 11,
    **dadurch gekennzeichnet,**
    **dass** die Fiber (15) die Oberfläche (11) der Haube aus flüssigem Metall (10) an zwei Inflexionspunkten (11a, 11b) dieser Oberfläche (11) durchquert.

13. Verfahren nach einem der Ansprüche 10 bis 12,
    **dadurch gekennzeichnet,**
    **dass** die Haube aus flüssigem Metall (10) eine Höhe aufweist, die mindestens das Zweifache des Innendurchmessers des Schmelztiegels (1) beträgt.

**Claims**

1. Liquid process for coating fibres with metal, essentially comprising the following operations:

   a) holding the liquid metal (10) in a crucible (1), the wall of said crucible (1) being labelled (3),
   b) drawing the tensioned fibre (15) through the liquid metal (10), said fibre (15) emerging from said liquid metal (10) at a point of exit labelled (21),
   c) the crucible (1) being of the "levitation" type and at least partially preventing contact between the liquid metal (10) and the wall (3) of the crucible (1),

   **characterized in that**:

   d) the wall (3) of the crucible (1) has two orifices (6, 7) located on either side of the liquid metal (10), at points where said liquid metal (10) does not come into contact with said wall (3), said orifices (6, 7) being connected by a slot (5) in the wall (3) of the crucible (1), said slot (5) bringing the inside of the crucible (1) into communication with the outside, said slot (5) having the shape of a controlled surface and having a sufficient width, said slot (5) being located at a point where the liquid metal (10) does not come into contact with the wall (3) of the crucible (1),

   and **in that**:

   e) the fibre (15) is drawn and held tensioned along a straight segment (18) between means of preemption (16, 17) of said fibre (15), said preemption means (16, 17) being external to the crucible (1),
   f) the fibre (15) is introduced into the crucible (1) by making it pass through the slot in a path transverse to said fibre,
   g) the tensioned fibre (15) passes through a first orifice (7), runs through the liquid metal (10) and emerges via the second orifice (6).

2. Process according to Claim 1, **characterized in that** the liquid metal (10) is a titanium alloy.

3. Process according to Claim 1 or 2, **characterized in that** the fibre (15) is made to emerge from the surface (11) of the liquid metal (10) at a point of exit labelled (21) in a direction approximately perpendicular to said surface (11) at this point of exit (21), so as to give said surface (11) an axial symmetry with respect to the fibre (15) in the vicinity of said point of exit (21).

4. Process according to any one of Claims 1 to 3, **characterized in that** the fibre (15) is made to emerge approximately vertically from the surface (11) of the liquid metal (10) at a point of exit labelled (21), so as to make the gravitational field axially symmetric with respect to said fibre (15) in the vicinity of said point of exit (21).

5. Process according to any one of Claims 1 to 4, **characterized in that** a crucible (1) and an inductor (8) in the shape of a body of revolution about a geometrical axis (2) are employed, and **in that** the fibre (15) is made to emerge from the surface (11) of the liquid metal (10) at a point of exit labelled (21), said exit taking place approximately along the geometrical axis (2), so as to give the electromagnetic field generated by the inductor (8) in the liquid metal (10) an axial symmetry with respect to the fibre (15) in the vicinity of the point of exit (21).

6. Process according to any one of Claims 1 to 5, the crucible (1) being placed vertically and having one orifice (7) facing downward and the other orifice (6) facing upward, **characterized in that** the fibre enters via the orifice (7) at the bottom, runs through the liquid metal (10) from the bottom up and emerges via the orifice (6) at the top, so as to orient the levitation forces in the direction and sense of the fibre (15) emerging from the liquid metal (10).

7. Process according to Claim 6, the wall (3) of said crucible (1) being segmented, at least two segments (4) being separated by the slot (5), **characterized in that** the fibre (15) is held tensioned in the liquid metal by two idler pulleys (16, 17) external to the crucible (1), and **in that** the fibre (15) is shifted away from said liquid metal (10) by a movable pulley (20), said fibre (15) passing through said slot (5).

8. Process according to Claim 1 or 2, **characterized in that** the two orifices (6, 7) for passage of the fibre (15) and the slot (5) connecting them are positioned opposite the space (25) between two turns (26) of the inductor (8), and **in that** the fibre (15), tensioned from outside of the crucible (1) + inductor (8) assembly, is introduced into the crucible (1) by making it pass between the two turns (26) and through the slot (5).

9. Process according to Claim 8, **characterized in that**:

    a. a feed opening (30) is placed in the bottom of the crucible (1) and below the inductor (8), said feed opening (30) facing downward;
    b. a bar (31) of metal is introduced via the feed opening (30) and the upper end (32) of said bar (31) is raised into the crucible (1) inside the inductor (8);
    c. the liquid metal (10) is shifted away from the edge of the feed opening (30) by the levitation effect, said shift taking place at least over a distance equal to the gap E1 left between the bar (31) and the edge of the feed opening (30).

10. Process according to Claim 9, **characterized in that** a cylindrical crucible (1) with no bottom is used, the feed opening (30) then coinciding with the lower end of the crucible (1), a dome of liquid metal (10) forming in the crucible (1) above the bar (31).

11. Process according to Claim 9 or 10, the crucible (1) being placed inside a chamber (40) containing a pressurized inert gas, **characterized in that** an opening (40a) is made in the wall of the chamber (40), said opening (40a) in the chamber (40) bringing the inside of the chamber into communication with the outside, said opening (40a) in the chamber (40) being placed so as to face the feed opening (30) of the crucible (1), and **in that** the bar (31) is made to pass through this opening with a smaller gap E2.

12. Process according to Claim 10 or 11, **characterized in that** the fibre (15) runs through the surface (11) of the dome of liquid metal (10) at two points of inflexion (11a, 11b) of said surface (11).

13. Process according to any one of Claims 10 to 12, **characterized in that** the dome of liquid metal (10) has a height at least equal to twice the internal diameter of the crucible (1).

**Fig : 1**

**Fig : 2**

**Fig : 3**

**Fig : 4**

Fig : 5

Fig : 6

15

Fig : 7

Fig : 8